# FASCICULE DE BREVET EUROPEEN

(11) **EP 0 527 664 B1**
(45) Date de publication et mention de la délivrance du brevet: **20.12.1995**
(21) Numéro de dépôt: 92402016.7
(22) Date de dépôt: 10.07.1992
(51) Int. Cl.: G05B 19/05

(54) **Procédé d'aide au développement d'un ensemble d'automates communicants**
Hilfsverfahren für die Entwicklung einer miteinander kommunizierender Automatengruppe
Method for helping the development of a communicating programmable logic controller set

(30) Priorité: 16.07.1991 FR 9108985
(43) Date de publication de la demande: 17.02.1993
(73) Titulaire: ALCATEL CIT, 75008 Paris (FR)
(72) Inventeur: Loyer, Bernard, F-22560 Pleumeur Bodou (FR); Colin, Catherine, F-22140 Begard (FR)
(74) Mandataire: Sciaux, Edmond

(56) Documents cités:
- US-A- 4 354 226
- US-A- 4 876 664
- US-A- 4 998 194

## Description

L'invention concerne un procédé d'aide au développement d'un ensemble d'automates communicants, ces automates communicants pouvant être concrétisés par un logiciel implanté dans une machine informatique ou bien par un circuit logique câblé. Ce procédé vise plus particulièrement la conception de systèmes de télécommunications, ceux-ci comportant notamment des applications de traitement d'appels pour un centre de commutation. Une application de traitement d'appels fonctionne en temps réel et comporte de nombreux automates communicants, c'est-à-dire traitant une pluralité de messages qui sont entrelacés.

Le développement d'un tel ensemble d'automates nécessite trois intervenants : un concepteur humain; une machine de développement qui est un ordinateur à usage général, dans lequel est implanté notamment un logiciel d'aide au développement d'un ensemble d'automates communicants; et une machine cible sur laquelle sera implanté un logiciel qui concrétisera l'ensemble d'automates communicants. Dans le cas d'un système de télécommunications, la machine cible est, par exemple, l'unité de commande multi-processeurs d'un centre de commutation. Dans ce cas, chaque automate est implanté entièrement dans un processeur, mais un même processeur peut supporter plusieurs automates.

Le concepteur d'un ensemble d'automates communicants constituant une application de traitement d'appel, par exemple, connaît au départ un ensemble de fonctions qu'il souhaite que cette application remplisse. Le comportement de chaque fonction sera décrit par un automate. Le concepteur connaît les interfaces externes et les interfaces internes de cet ensemble d'automates. Le développement d'un ensemble d'automates communicants comporte quatre étapes :
- une spécification d'un ensemble d'automates communicants, à partir des fonctions souhaitées, ces automates communicants étant destinés à être implantés sous la forme de logiciels dans la machine cible, mais étant développés sur la machine de développement, sous la forme de modèles;
- une analyse des automates et de leurs communications par leurs interfaces, sur cette machine de développement, sous la forme de modèles;
- une implémentation des automates communicants dans la machine cible, sous la forme de logiciels;
- une validation de ces logiciels dans la machine cible.

Il est connu d'utiliser des techniques de descriptions formelles, lesquelles offrent des moyens puissants, pour concevoir un ensemble d'automates communicants. En particulier, on utilise certains langages spécialisés dont la sémantique est basée sur des modèles mathématiques. Ces langages permettent aussi de faire certaines vérifications, mais les procédés d'utilisation de ces langages conviennent mal pour des systèmes de grande complexité tels que les systèmes de télécommunications.

Par ailleurs, on connaît la technique de modélisation par les réseaux de Petri, notamment par l'article : "Modelling and Analysis of Communication and Cooperation Protocols Using Petri Nets Based Models" North Holland Publishing Compagny Computer Networks 6 (1982) pages 419-441.

La technique des réseaux de Petri est une extension de la technique des automates séquentiels à nombre d'états fini, cette dernière utilisant les notions d'état et de transition. Une transition modèlise le passage du système d'un état stable à un autre état stable. L'originalité des réseaux de Petri tient essentiellement au fait que les transitions ne relient plus des états globaux d'un système, mais des états partiels appelés places, ce qui permet d'exprimer la synchronisation. Un certain nombre de marques appelées jetons, peuvent exister dans les places. Chaque configuration des jetons correspond à un état global différent. La technique des réseaux de Petri permet de représenter un ensemble de nombreux états et de nombreuses transitions d'un automate, et notamment la synchronisation entre automates.

Lorsque la technique des réseaux de Petri est utilisée pour développer une application, la spécification de cette application consiste à décrire, sous la forme d'un réseau de Petri :
- des places et une configuration initiale des jetons, pour l'état global initial;
- des transitions reliées aux places, et associées à des évènements, chaque évènement étant déclencheur ou conséquence d'une transition, ces évènements concrétisant l'interface entre l'application et l'extérieur à l'application.

L'analyse consiste à vérifier des propriétés souhaitées par le concepteur, notamment la consistance globale du réseau de Petri obtenu , c'est-à-dire qu'il possède des propriétés minimales d'un réseau de Petri; et consiste à rechercher des propriétés constamment vraies appelées invariants. Une analyse est exhaustive si elle consiste en une recherche de tous les états, notamment pour vérifier l'accessibilité de chaque état et la vivacité de chaque transition. La recherche des invariants consiste en une vérification sur la structure du réseau de Petri; et ainsi la détermination de certaines propriétés spécifiques à l'application qui est modélisée.

L'ensemble des états accessibles est appelé graphe d'accessibilité, et constitue un automate qui concrétise l'application à développer.

L'implémentation sur la machine cible découle directement de la modélisation réalisée sous la forme d'un réseau de Petri pendant l'étape de spécification, en ce qui concerne la synchronisation. Il reste à écrire des suites d'instructions correspondant à des actions associées aux transitions du modèle réseau de Petri.

La validation du logiciel consiste à définir des jeux de test et à faire exécuter ces jeux de test. Classiquement ceux-ci sont définis par le concepteur.

Pour développer une application complexe, comportant de nombreuses places et de nombreuses transitions, ce procédé connu présente les difficultés suivantes :
- le concepteur a beaucoup de difficulté à décrire le comportement global de cette application par un réseau de Petri unique;
- l'analyse exhaustive de ce réseau nécessite un temps de calcul et une capacité de mémoire atteignant rapidement des valeurs prohibitives sur la machine de développement;
- la mise au point est difficile et nécessite de refaire l'analyse de nombreuses fois.

Le but de l'invention est de proposer un procédé d'aide au développement d'un ensemble d'automates communicants, qui ne présente pas ces inconvénients.

L'objet de l'invention est un procédé d'aide au développement d'un ensemble d'automates communicants, ces automates comportant une pluralité d'interfaces qui traitent une pluralité de messages entrelacés; cet ensemble d'automates étant développé à partir : d'interfaces externes à l'ensemble, d'interfaces inter-automates, et de la fonction que doit remplir chaque automate de cet ensemble, et de la fonction que remplit l'environnement extérieur à chaque interface externe à l'ensemble;
caractérisé en ce qu'il consiste à :
- fournir à une machine de développement une description de réseaux de Petri élémentaires dits initiaux, modélisant respectivement les comportements partiels de chaque fonction, en décrivant notamment des évènements déclencheurs ou conséquences de transitions dans chaque réseau de Petri initial en attribuant une étiquette à chaque transition, cette étiquette étant fonction d'au moins un évènement, chaque évènement étant un déclencheur ou étant une conséquence de cette transition, ces évènements concrétisant : des interfaces externes à l'ensemble d'automates, des interfaces inter-automates, et des interfaces inter-réseaux initiaux;
- vérifier, au moyen de cette machine de développement, que chaque réseau initial possède des propriétés souhaitées;
- fournir à cette machine de développement une description des contraintes inter-réseaux initiaux, correspondant au comportement de l'environnement extérieur à l'ensemble d'automates;
- désigner à cette machine de développement, une pluralité de réseaux à composer et un mode de communication, pour lui faire composer des réseaux de Petri initiaux, entre eux ou avec des réseaux de Petri remplaçant des réseaux initiaux ayant été composés précédemment, ou bien composer des réseaux remplaçant des réseaux initiaux ayant été composés précédemment; chaque composition étant réalisée en faisant communiquer au moins deux réseaux, par l'intermédiaire des étiquettes de leurs transitions, selon le mode de communication désigné, ce dernier étant choisi parmi :
   -- un mode synchrone;
   -- un mode asynchrone;
   -- un mode dit pseudo-synchrone, selon lequel les évènements constituant une communication avec l'extérieur au réseau résultant de la composition, sont synchrones vis-à-vis de l'extérieur des réseaux à composer et sont asynchrones vis-à-vis des réseaux à composer; chaque composition par le mode pseudo-synchrone tenant compte des contraintes inter-réseaux;
- puis vérifier, au moyen de la machine de développement, que le réseau obtenu par cette composition a des propriétés souhaitées;
- fournir à la machine de développement une description de réseaux initiaux modifiés, en remplacement de réseaux initiaux à composer, si le réseau obtenu en composant ces derniers n'a pas les propriétés souhaitées;
- puis désigner de nouveau à la machine de développement une pluralité de réseaux à composer et un mode de communication pour lui faire réaliser une suite de compositions et de vérifications, jusqu'à l'obtention de réseaux de Petri ayant des propriétés souhaitées et modélisant respectivement : chaque communication entre deux automates ou entre une interface externe d'un automate et l'environnement de l'ensemble d'automates, et chaque automate de l'ensemble.

Le procédé ainsi caractérisé a pour avantage que le concepteur humain d'un ensemble d'automates communicants très complexe, n'a à concevoir, et à manipuler, que des réseaux de Petri élémentaires, c'est-à-dire ne comportant que quelques places et transitions. La composition de réseaux de Petri élémentaires, puis la composition de réseaux de Petri remplaçant des réseaux initiaux ayant été précédemment composés, permet de modéliser finalement un ensemble d'automates beaucoup plus complexe que celui qui pourrait être modélisé par un réseau de Petri global, ou par un langage de description formelle reposant sur la modélisation par automates.

Le procédé ainsi caractérisé permet de concevoir un ensemble d'automates communicants en réalisant une analyse exhaustive des réseaux de Petri modélisant ces automates, sans nécessiter un temps de calcul et une capacité de mémoire ayant des valeurs prohibitives, parce que la vérification des propriétés souhaitées est faite par étapes, au fur et à mesure de la composition des réseaux de Petri initiaux, et sans aller jusqu'à un réseau de Petri modélisant l'ensemble des automates.

L'implémentation d'un automate obtenu par le procédé selon l'invention consiste à écrire une suite d'instructions pour chaque transition de réseau de Petri élémentaire. Le nombre de transitions est plus élevé que celui obtenu par une modélisation par un réseau de Petri unique, à cause des compositions de réseau. Ce nombre élevé de transitions facilite l'écriture des suites d'instructions correspondant à des actions associées aux transitions, puisque l'augmentation du nombre des transitions correspond à une simplification des actions associées aux transitions. Autrement dit, chaque action est réalisée au moyen d'un plus petit nombre d'instructions. Ces suites d'instructions ont en plus l'avantage d'avoir un déroulement linéaire, c'est-à-dire sans branchement. Elles sont donc faciles à mettre au point.

La validation du logiciel implémentant cet ensemble d'automates est simple car, la cohérence des états et des transitions quant été vérifiée avant l'implantation sur la machine cible, il ne reste qu'à vérifier les suites d'instructions correspondant à des actions associées aux transitions.

Le test est simple puisqu'il peut, lui aussi, être fait par étape. Il consiste à produire des suites de franchissements de transitions en parcourant de façon complète l'ensemble de transitions de l'automate dérivé du réseau de Petri obtenu pour chaque automate et pour chaque communication. Ces suites de franchissements de transitions peuvent être éventuellement réduites ensuite, selon des critères de sélection, afin de réduire le nombre de tests.

Le procédé ainsi caractérisé a enfin pour avantage de faciliter la maintenance d'un ensemble d'automates ayant été conçus à l'aide de ce procédé. Toute modification ou extension de cet ensemble d'automates ne doit pas dégrader la cohérence de l'ensemble. Pour que cette condition soit remplie, il est nécessaire de reprendre la mise en oeuvre du procédé selon l'invention, dès son point de départ, c'est-à-dire dès la description des réseaux de Petri élémentaires initiaux. Ceci peut sembler être une contrainte, à première vue, mais en fait ceci garantit la qualité du logiciel obtenu finalement après ces opérations de maintenance.

Selon une autre caractéristique, pour réaliser des compositions par le mode de communication synchrone, le procédé selon l'invention consiste à fusionner toutes les transitions appartenant à deux réseaux à composer et dont les étiquettes comportent un même événement qui est :
- soit conséquence de l'une des transitions et déclencheur d'une autre transition;
- soit conséquence commune des transitions;
- soit déclencheur commun des transitions.

Selon une autre caractéristique, pour réaliser des compositions par le mode de communication asynchrone, le procédé selon l'invention consiste à :
- relier un premier et un deuxième réseau à composer, par une file dans chaque sens de communication;
- imposer des contraintes temporaires sur le protocole de communication utilisant ces deux files, pendant la durée de la vérification des propriétés souhaitées du réseau résultant de la composition des deux réseaux à composer et des deux files.

Selon une autre caractéristique, pour réaliser des compositions selon le mode de communication pseudo-synchrone, le procédé selon l'invention consiste à :
- relier ces réseaux par une file unique possédant une pluralité d'entrées reliées respectivement à une sortie de chacun des réseaux à composer, et une pluralité de sorties reliées respectivement à une entrée de chacun des réseaux à composer;
- imposer une contrainte permanente consistant à donner la priorité aux évènements en provenance de cette file, par rapport aux évènements en provenance des interfaces extérieures au réseau obtenu, pour le déclenchement de transitions dans les réseaux à composer;
- imposer des contraintes temporaires inter-réseaux, uniquement pendant la durée de la vérification des propriétés souhaitées du réseau de Petri modélisant le comportement d'un automate, et consistant à ajouter des conditions pour le déclenchement de transitions d'un réseau à composer, ces conditions portant sur l'état des autres réseaux à composer, et correspondant au comportement de l'environnement du réseau résultant.

Selon un mode de mise en oeuvre préférentiel, et si tous les réseaux de Petri initiaux comportent chacun au plus une interface externe à un automate, la composition des réseaux élémentaires initiaux est réalisée en trois étapes successives, dans cet ordre :
- une première étape consistant à : composer des réseaux deux à deux par le mode de communication synchrone, pour obtenir des réseaux de Petri remplaçant des réseaux initiaux et comportant au plus une interface externe à un automate; vérifier que les réseaux obtenus ont des propriétés souhaitées; et recommencer la première étape pour les réseaux qui ont été composés et dont le réseau résultant n'a pas les propriétés souhaitées;
- une deuxième étape consistant, pour chaque interface externe à un automate, à : composer deux à deux par le mode de communication asynchrone des réseaux de Petri issus de la première étape et ayant en commun une interface inter-automates ou externe à l'ensemble d'automates, pour obtenir lors de chaque composition un réseau de Petri modélisant une communication entre deux interfaces inter-automates ou entre une interface externe à un automate et l'environnement de l'automate; vérifier que les réseaux obtenus ont des propriétés souhaitées; et recommencer la première étape pour les réseaux qui ont été composés et dont le réseau résultant n'a pas les propriétés souhaitées;
- une troisième étape consistant à : réaliser, pour chaque automate, une composition par le mode de communication pseudo-synchrone, pour composer des réseaux de Petri issus de la première étape et validés par la deuxième étape, en tenant compte des contraintes inter-réseaux initiaux correspondant au comportement de l'extérieur à l'ensemble, pour obtenir un réseau de Petri modélisant le comportement de cet automate, notamment les communications entre les réseaux issus de la première étape; vérifier que les réseaux obtenus ont des propriétés souhaitées; et recommencer la première et la deuxième étape pour les réseaux qui ont été composés et dont le réseau résultant n'a pas les propriétés souhaitées ;

Ce mode de mise en oeuvre du procédé selon l'invention réduit les problèmes de mise au point d'un ensemble d'automates parce-que la première étape permet de composer tous les réseaux initiaux qui sont rattachés à une même interface inter-automates ou à une même interface externe d'un automate, ou qui ont en commun de n'être rattachés à aucune interface, ce qui permet de rendre indépendants les problèmes de mise au point de chaque communication entre un automate et son environnement. La deuxième étape permet de résoudre ces problèmes indépendamment pour chaque communication. La troisième étape permet de mettre au point les communications internes à un automate indépendamment des autres automates.

D'autres détails de la mise en oeuvre du procédé selon l'invention apparaîtront dans la description ci-dessous et à l'aide des figures l'accompagnant :
- la figure 1 représente un organigramme d'un exemple de mise en oeuvre du procédé selon l'invention;
- la figure 2 représente schématiquement un exemple de transition et l'étiquette qui lui est attribuée;
- les figures 3 à 6 illustrent le mode de communication synchrone qui est utilisé pour composer des réseaux de Petri;
- la figure 7 illustre la composition de deux réseaux de Petri par le mode de communication asynchrone;
- la figure 8 illustre la composition de trois réseaux de Petri par le mode de communication dit pseudo-synchrone;
- les figures 9, 10a, et 10b illustrent le mode de mise en oeuvre préférentiel comportant trois étapes successives au cours desquelles sont utilisés successivement les modes de communication : synchrone, asynchrone, pseudo-synchrone.

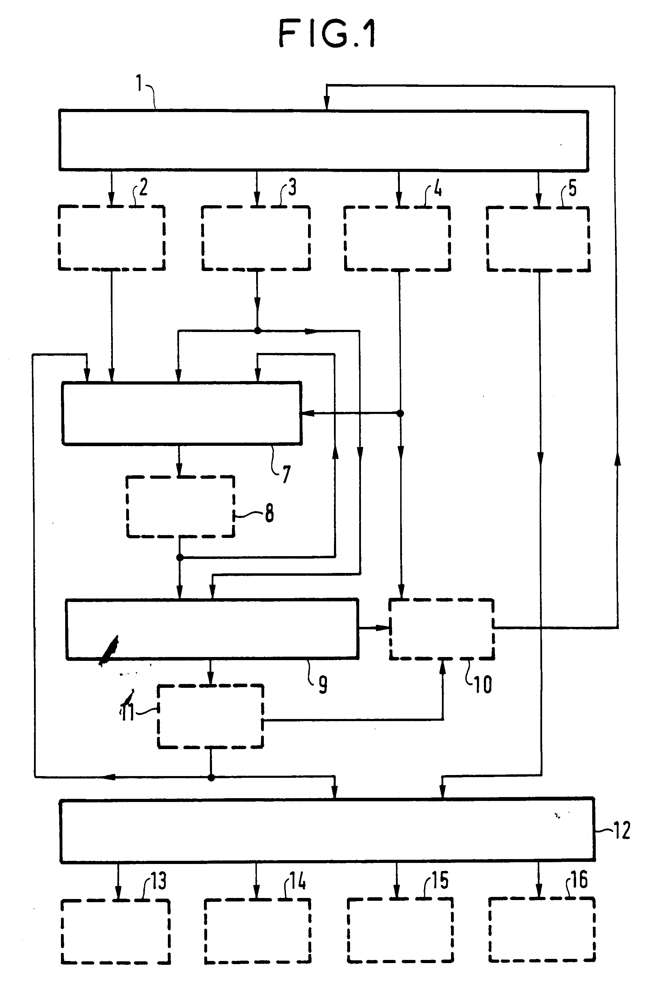

La figure 1 représente un organigramme d'un exemple de mise en oeuvre du procédé selon l'invention, sous la forme d'un logiciel implanté dans une machine de développement constituée d'un ordinateur classique à usage général. L'écriture de ce logiciel à partir de la description ci-dessous est à la portée de l'Homme de l'Art. Cet exemple de mise en oeuvre est utilisé, par exemple, pour développer un ensemble d'automates communicants constituant une application de traitement d'appels d'un centre de commutation. Chaque fonction sera décrite par un automate.

Une première étape 1 de l'organigramme consiste à faire décrire, par le concepteur, chaque fonction de l'application sous la forme de comportements partiels modélisés chacun par un réseau de Petri élémentaire initial 3, sous la forme d'interfaces 4, inter-automates ou externes à l'ensemble d'automates, sous la forme de contraintes inter-réseaux initiaux et sous la forme de propriétés souhaitées, spécifiques pour chaque automate. Pour appliquer le mode de mise en oeuvre préférentiel du procédé selon l'invention, le concepteur prend soin de modéliser chaque comportement partiel par un réseau de Petri élémentaire initial n'ayant qu'une seule interface, ou aucune interface externe à un automate. Chaque réseau de Petri initial ayant une interface externe respecte des contraintes imposées par des interfaces externes à l'ensemble d'automates ou par des interfaces inter-automates. La définition de chaque réseau initial correspond généralement à une phase d'une communication. Les contraintes inter-réseaux initiaux corespondent, pour chaque automate, au comportement de l'environnement extérieur à l'ensemble.

Au moment de faire réaliser, par la machine de développement, chaque composition de réseaux de Petri, le concepteur indique à la machine de développement quels réseaux il souhaite composer et selon quel mode de communication, 2.

Au cours de la description initiale le concepteur décrit aussi des données complémentaires 5 concernant les actions associées aux transitions et qui seront nécessaires au moment au moment de l'implémentation du logiciel concrétisant l'ensemble d'automates qui va être développé.

L'étape suivante consiste en une première analyse 9 pour vérifier la consistance des réseaux de Petri initiaux. Elle vérifie les propriétés minimales et classiques d'un réseau de Petri : Il doit être borné, vivant, propre, et sans blocage. Si l'un des réseaux initiaux n'a pas toutes ces propriétés, la machine de développement le signale au concepteur pour qu'il rectifie la description initiale des comportements partiels.

La description initiale 1 de chaque réseau de Petri consiste aussi à décrire pour chaque transition de ce réseau, les évènements déclencheurs de cette transition et les évènements conséquences de cette transition. Cette description est réalisée de manière très concise, sous la forme d'une étiquette attribuée à chaque transition, en inscrivant ces évènements les uns à la suite des autres et en faisant précéder chacun d'un symbole, ? ou !, indiquant respectivement si c'est un évènement déclencheur ou si c'est un évènement conséquence de la transition.

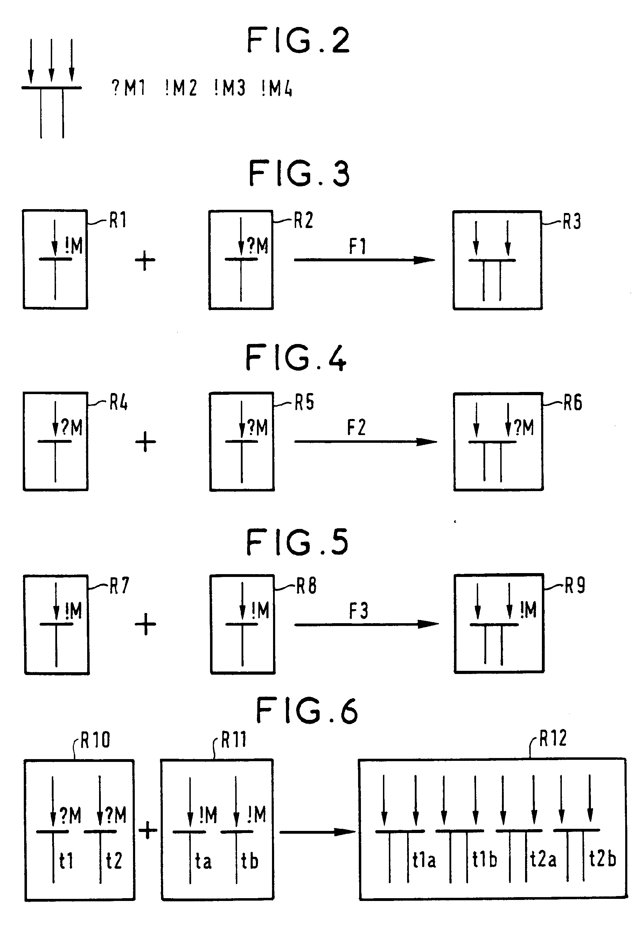

La figure 2 représente à titre d'exemple une transition et son étiquette ?M1 !M2 !M3 !M4. Cette étiquette signifie que la transition est déclenchée par l'évènement M1 et qu'elle a pour conséquences des évènements M2, M3, M4. Comme il apparaîtra plus loin, la comparaison entre les étiquettes respectives de deux transitions de deux réseaux différents permet de savoir quels sont leurs interactions. Ces étiquettes sont donc une représentation de la communication entre des transitions n'appartenant pas à un même réseau de Petri. Elles sont utilisées par la machine de développement, pour composer des réseaux de Petri, désignés par le concepteur, lorsque le concepteur veut établir une communication entre des réseaux à composer.

Sur la figure 1, la mise en oeuvre du procédé selon l'invention consiste ensuite à faire réaliser par la machine de développement une série de compositions 7 et d'analyses 9. Chaque composition 7 étant suivie d'une analyse 9 du réseau résultant 8, qui fournit un graphe d'accessibilité 11 et vérifie les propriétés 10 du réseau résultant, et les confronte aux propriétés souhaitées 4.

Pour faciliter la vérification de propriétés spécifiques de réseaux résultant de la composition de réseaux, le procédé consiste, en outre, à repérer certains évènements au moment où le concepteur décrit les réseaux de Petri initiaux. Les évènements ainsi repérés, sont éliminés du graphe d'accessibilité 11, ce qui permet d'en réduire la taille, et facilite son interprétation par le concepteur.

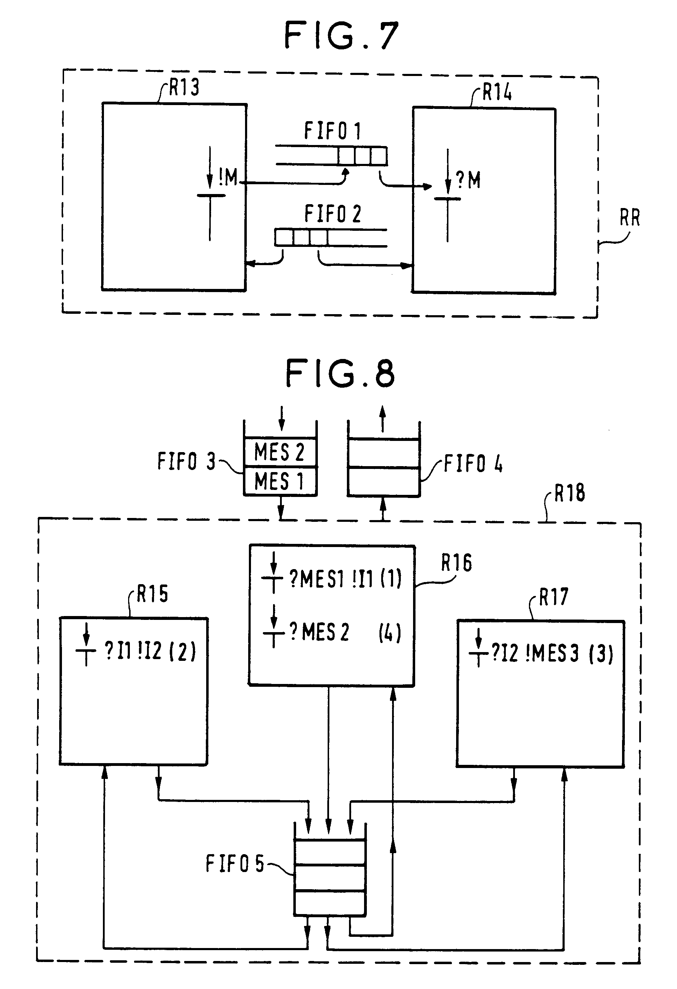

Lorsque les trois étapes du procédé ont été réalisés avec succès, le procédé d'aide à la conception peut être suivi d'une implémentation 12 de l'ensemble des automates ayant été ainsi conçus et analysés. Cette implémentation consiste à faire correspondre des tâches logicielles aux transitions d'un graphe d'accessibilité. La machine de développement décrit les transitions sous la forme de tableaux de données structurées 13. Ces transitions peuvent être activées par un logiciel classique : interprète d'automate ou interprète multi-automates, implanté sur la machine cible. La taille des tables de descriptions du graphe d'accessibilité est généralement prohibitive lorsqu'on considère le graphe d'accessibilité du réseau de Petri modélisant chaque automate de l'ensemble d'automates E. Il est donc préférable de décrire plutôt les graphes d'accessibilité de plusieurs sous-automates constituant un automate pour obtenir des tables de descriptions ayant des tailles raisonnables. Les contraintes inter-réseaux initiaux, lesquelles sont représentées par des contraintes entre sous-automates, ne sont pas implémentées car elles existent déjà dans l'environnement extérieur à l'ensemble. Dans le cas de l'implémentation de plusieurs sous-automates, il est nécessaire de prévoir un mécanisme de synchronisation entre les différents sous-automates, en utilisant une file interne spécifique pour cette synchronisation. Cette file est celle utilisée pour la composition des sous-automates et décrite plus loin en référence à la figure 8.

Par ailleurs, le concepteur implémente chaque action 5 par une suite d'instructions, la machine de développement identifie cette suite d'instructions 14, en mettant en commentaire le nom de la transition qui correspond à cette action.

Lorsque le logiciel a été codé et compilé, il est validé de manière classique au moyen de jeux de test 16 qui sont des séquences d'évènements déterminés à partir des graphes d'accessibilité :
- soit des modèles représentant les différents automates constituant l'ensemble E;
- soit des modèles représentant les différents sous-automates constituant chaque automate.

Accessoirement l'implémentation 12 produit aussi une documentation 15 en vue de l'utilisation des logiciels implémentant l'ensemble d'automates ayant été conçu.

Considérons plus en détails les compositions 7. Chaque composition consiste à composer plusieurs réseaux de Petri. Mais selon le mode de mise en oeuvre préférentiel, dans une première étape, toutes les opérations de composition sont réalisées par le mode de communication synchrone et composent exclusivement :
- soit deux réseaux initiaux;
- soit un réseau initial et un réseau remplaçant des réseaux initiaux ayant été composés précédemment;
- soit deux réseaux remplaçants.

En outre, au cours de cette première étape, les réseaux de Petri résultant de ces compositions doivent comporter au plus une interface externe à un automate.

Le mode de communication synchrone consiste à fusionner au moins deux transitions appartenant aux deux réseaux de Petri à composer et ayant un même évènement en commun dans leurs étiquettes. Les figures 3 à 5 illustrent ces trois types possibles de fusion de transitions. Le concepteur choisit l'un de ces trois types pour chaque fusion.

La figure 3 illustre un premier type de fusion F1. Si un réseau de Petri R1 possède une transition qui a pour conséquence l'évènement M et si le réseau R2 possède une transition qui a pour déclencheur l'évènement M, ces deux réseaux peuvent être fusionnés par le type de fusion F1 pour constituer un réseau R3 possédant une transition résultant de la fusion des deux transitions considérées.

La figure 4 illustre un second type de fusion F2. Si un réseau R4 possède une transition déclenchée par un évènement M et si un réseau R5 possède une transition déclenchée, elle aussi, par l'évènement M, ces deux réseaux peuvent être fusionnés en un réseau R6 possédant une transition résultant de la fusion des deux transitions considérées et qui est déclenchée par l'évènement M.

La figure 5 illustre un troisième type de fusion F3. Si un réseau R7 possède une transition ayant pour conséquence un évènement M et si un réseau R8 possède une transition qui a, elle aussi, pour conséquence l'évènement M, alors ces deux réseaux peuvent être fusionnés pour constituer un réseau de Petri R9 possédant une transition qui a pour conséquence l'évènement M.

Lorsque chacun des réseaux à composer possède plus d'une transition qui est la conséquence ou le déclencheur d'un même évènement, le réseau remplaçant les réseaux composés possède des transitions résultantes qui sont répliquées à cause de la composition deux à deux des transitions des réseaux à composer.

La figure 6 illustre ce cas. Si un réseau R10 possède deux transitions t1, t2 qui ont pour déclencheur un même évènement M et si un réseau R11 possède deux transitions ta, tb qui ont pour conséquence le même évènement M, alors il est possible de fusionner ces transitions deux à deux par le type de fusion F1 et d'obtenir un réseau résultant R12 comportant quatre transitions t1a, t1b, t2a, t2b.

Comme représenté sur la figure 1, après chaque composition 7, un réseau résultant 8 subit une analyse 9 qui consiste à vérifier, 10, que les propriétés obtenues correspondent aux propriétés 4 souhaitées par le concepteur, et à déterminer un graphe d'accessibilité 11. La détermination 11 du graphe d'accessibilité et la vérification 10 des propriétés sont réalisées simultanément par la machine de développement, selon des procédés de calcul classiques pour des réseaux de Petri. Cette analyse est dynamique et exhaustive, c'est-à-dire recherche tous les états et toutes les transitions possibles dans le réseau résultant de la composition. Elle déduit de ce graphe les propriétés générales de ce réseau et notamment vérifie s'il est : borné, sauf, vivant, propre, et sans blocage.

Elle détermine en outre si le réseau a les propriétés spécifiques souhaitées recherchées par le concepteur. Si le réseau a toutes les propriétés spécifiques souhaitées, la mise en oeuvre du procédé peut être poursuivie. Dans le cas contraire, la machine de développement indique au concepteur quelles sont les propriétés qui ne sont pas vérifiées. Le concepteur modifie la description des réseaux initiaux pour y remédier. D'autre part, le graphe d'accesibilité 11 peut être réutilisé pour des compositions ultérieures avec d'autres réseaux de Petri, soit initiaux, soit résultant de composition précédemment réalisées.

Selon le mode de mise en oeuvre préférentiel, une deuxième étape, pour les compositions 7 de réseaux de Petri, consiste pour chaque interface externe à l'ensemble d'automates et pour chaque interface inter-automates, à réaliser des compositions par le mode de communication asynchrone pour composer des réseaux de Petri remplaçant des réseaux initiaux, entre eux ou avec un réseau initial éventuellement subsistant, pour obtenir lors de chaque composition un réseau de Petri modélisant une communication entre deux automates ou entre une interface externe à un automate et l'environnement de cet automate.

Chacun des réseaux de Petri obtenus à la fin de la première étape représente le comportement d'un sous-automate constituant une partie de l'un des automates à concevoir, même s'il s'agit d'un réseau initial subsistant.

Toutes les opérations de composition réalisées au cours de la deuxième étape sont réalisées au moyen de deux files, une dans chaque sens de communication. Ces deux files sont du type "premier entré, premier sorti", et sont incorporées au réseau résultant. Ce mode de communication est utilisé pour pouvoir analyser des dialogues asynchrones entre réseaux de Petri, et plus particulièrement pour analyser des protocoles de communication.

La figure 7 illustre le mode de communication asynchrone, dans un exemple où deux réseaux R13 et R14 sont mis en communication au moyen de deux files référencées FIFO1 et FIFO2, une pour chaque sens, pour constituer un réseau résultant RR. Pour mieux analyser la communication asynchrone entre les deux réseaux, des contraintes sur la communication peuvent consister à imposer : des pertes de signaux ou des débordements de temporisation; ou une certaine synchronisation temporaire, selon une transmission en alternat entre les deux réseaux; ou bien une limitation temporaire du nombre d'évènements stockés en attente dans chacune des deux files. Ces contraintes sont intégrées automatiquement aux réseaux de Petri, par la machine d'aide au développemement, sous la commande du concepteur. Il est à la portée de l'homme de l'art de réaliser un programme, pour cette machine de développement, mettant en oeuvre cette caractéristique du procédé selon l'invention.

Selon le mode de mise en oeuvre préférentiel du procédé selon l'invention, les compositions de réseaux comportent une troisième étape consistant à réaliser des compositions uniquement par le mode de communication pseudo-synchrone, pour composer les réseaux de Petri fournis par la premiètre étape. Le mode de communication pseudo-synchrone est obtenu au moyen d'une seule file du type "premier entré premier sorti", et en donnant une priorité aux transitions déclenchées par des évènements conséquences de transitions internes aux réseaux à composer, par rapport aux transitions déclenchées par des évènements externes à ces réseaux.

Cette priorité ainsi que la file garantissent une communication synchrone à l'extérieur du réseau résultant mais maintiennent une communication asynchrone à l'intérieur du réseau résultant.

La figure 8 illustre la communication pseudo-synchrone. Elle représente un réseau de Petri R18 résultant de la composition de trois réseaux de Petri R15, R16, R17 au moyen d'une file de type "premier entré premier sorti" référencée FIFO5 et qui est incorporée au réseau résultant R18. Ce réseau résultant possède une interface le reliant au reste de l'ensemble d'automates et le reliant à l'extérieur de l'ensemble, constitué par exemple d'une file d'entrée référencée FIFO3 et d'une file de sortie référencée FIFO4. La file FIFO5 comporte trois entrées reliées respectivement à trois sorties des réseaux R15 à R17 et trois sorties reliées respectivement à trois entrées des réseaux R15 à R17. Chaque évènement qui est la conséquence d'une transition dans l'un des réseaux R15, R16, R17 et qui est le déclencheur d'une autre transition dans l'un de ces réseaux transite par la file d'attente FIFO5. Ces évènements vont donc réagir sur les réseaux R15, R16, R17 dans l'ordre où ils sont inscrits dans la file d'attente FIFO5. Cette file, et la priorité selon laquelle elle est gérée, maintiennent synchrone la communication vis-à-vis des évènements externes au réseau résultant R18.

Dans cet exemple, le réseau R15 comporte une transition déclenchée par l'évènement I1 et ayant pour conséquence l'évènement I2. Le réseau R16 possède une première transition déclenchée par un évènement qui est un message MES1 reçu par l'interface et cette transition a pour conséquence un évènement I1. Le réseau R16 possède une seconde transition déclenchée par un évènement qui est un message MES2, et qui est sans conséquence. Le réseau R17 possède une transition qui est déclenchée par l'évènement I2 et qui a pour conséquence un évènement constitué par un message MES3.

Sur la figure 8, les chiffres entre parenthèses indiquent l'ordre de déclenchement des transitions conformément à la règle de priorité. A l'instant considéré, les messages MES1 et MES2 viennent d'être inscrits dans la file d'entrée FIFO3 de l'interface du réseau résultant R18. La première transition du réseau R16 est déclenchée par le message MES1 qui est lu en premier dans la file d'entrée FIFO3. Cette transition a pour conséquence l'évènement I1. Ce dernier déclenche immédiatement la transition du réseau R15 car il est prioritaire par rapport à la lecture du message MES2. Cette transition, qui est la deuxième transition depuis l'arrivée des messages, a pour conséquence l'évènement I2. L'évènement I2 est lui aussi prioritaire par rapport à la lecture du message MES2. Il déclenche la transition du réseau R17, qui à pour conséquence un évènement qui est l'émission d'un message MES3 qui est inscrit dans la file de sortie FIFO4. Il n'y a plus d'interaction interne possible pour le moment, la règle de priorité autorise à lire le prochain message MES2, qui est stocké dans la file d'entrée FIFO3. Ce message MES2 est un évènement qui déclenche la seconde transition du réseau R16. L'ordre de prise en compte des messages externes est donc finalement : MES1, MES3, MES2. Le message MES2 ne déclenche la seconde transition du réseau R16 qu'après que le message MES1 ait été complètement traité, c'est-à-dire après avoir déclenché la première transition de R16 puis la transition de R15 puis la transition de R17. La communication entre les réseaux R15, R16, R17 est donc globalement asynchrone à l'intérieur du réseau résultant R18, mais la communication est synchrone avec l'extérieur.

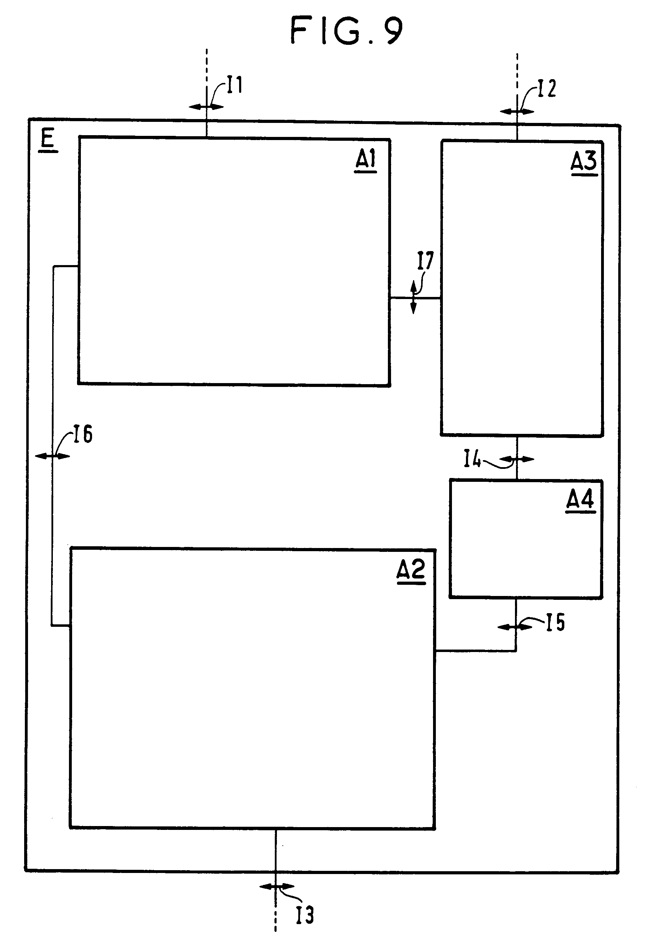

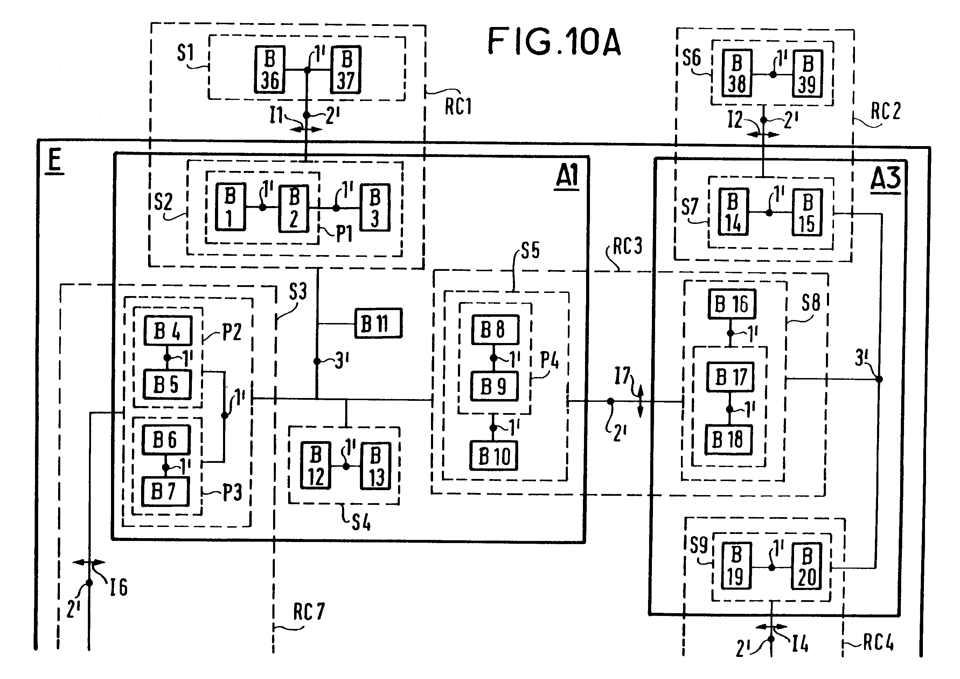

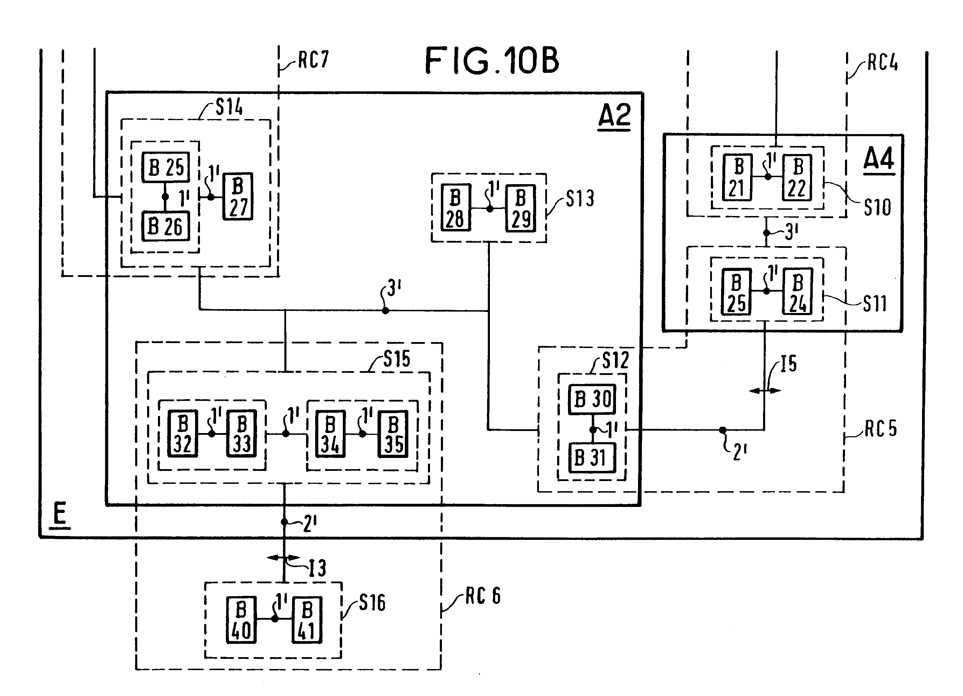

Les figures 9, 10a, et 10b illustrent un exemple de mise en oeuvre du procédé selon l'invention, selon le mode préférentiel, pour aider au développement d'un ensemble d'automates communicants E, cet ensemble comportant des interfaces externes I1, I2, I3 et des interfaces internes inter-automates I4 à I7. Les interfaces I1, I2, I3 sont respectivement des interfaces externes aux automates A1, A3, A2. Les automates A1 et A3 sont reliés par l'interface inter-automates I7. Les automates A2 et A4 sont reliés par l'interface inter-automates I4. Les automates A3 et A4 sont reliés par l'interface inter-automates I5. Les automates A2 et A1 sont reliés par l'interface inter-automates I6.

Au départ, le concepteur connaît les fonctions réalisées par les environnements de ces interfaces externes I1, I2, I3; et il connaît la fonction que doit remplir chacun des automates de l'ensemble : A1, A2, A3, A4. La fonction de chacun de ces environnements et de ces automates est décomposable en comportements partiels. Le concepteur décrit chacun de ces comportements partiels au moyen d'un réseau de Petri élémentaire, c'est-à-dire, ne comportant que quelques transitions et quelques places.

Cette description consiste à fournir à la machine de développement une étiquette pour chaque transition, cette étiquette contenant un évènement déclencheur et la liste des évènements conséquences de cette transition, notés de la façon décrite précédemment en référence à la figure 2. En principe, il n'y a pas, dans un même réseau de Petri initial, deux transitions déclenchées au même instant par un même évènement. Cependant la technique des réseaux de Petri et le procédé selon l'invention n'interdisent pas de concevoir et d'utiliser un réseau de Petri initial comportant plusieurs transitions déclenchables au même instant par un même évènement. Ces transitions sont dites indéterministes. Il est cependant nécessaire que des conditions supplémentaires permettent de lever l'indétermination du choix de déclenchement de ces transitions, au moment de l'implémentation de l'ensemble d'automates.

Les évènements qui constituent les étiquettes des réseaux de Pétri élémentaires initiaux sont : des évènements concrétisant les interfaces externes I1, I2, I3; des évènements concrétisant les interfaces inter-automates I4 à I7; des évènements concrétisant des interfaces inter-réseaux initiaux; et des évènements internes à un automate, réalisant un choix entre des transitions indéterministes.

Le concepteur fournit en outre à la machine de développement une description de contraintes inter-réseaux initiaux correspondant au comportement de l'environnement extérieur à l'ensemble d'automates E, et une description de propriétés souhaitées pour les réseaux de Petri élémentaires initiaux, mais aussi pour les réseaux de Petri résultant des compositions réalisées ultérieurement. Ces propriétés souhaitées sont d'une part la consistance de chaque réseau de Petri, et d'autre part des proprités spécifiques à chacun de ces réseaux.

Le concepteur fournit aussi à la machine de développement une description de réseaux de Petri initiaux, modélisant respectivement les comportements de l'environnement extérieur à chacune des interfaces externes I1, I2, I3 de l'ensemble d'automates E. Conformément au mode de mise en oeuvre préférentiel du procédé selon l'invention, le concepteur conçoit les réseaux de Petri initiaux de telle sorte que chacun comporte au plus une interface externe à un automate, et il commande la composition des réseaux initiaux selon la première et la deuxième étapes décrites précédemment.

La figure 10, constituée de la réunion des figures 10a et 10b, représente schématiquement les réseaux de Petri initiaux et les opérations de composition réalisées pour concevoir l'ensemble d'automates E représenté sur la figure 9. Les opérations de composition de la première étape sont toutes repérées par le chiffre 1′, les opérations de composition de la deuxième étape sont toutes repérées par le chiffre 2′, et les opérations de composition de la troisième étape sont toutes repérées par le chiffre 3′.

La première étape consiste à composer des réseaux de Petri initiaux deux à deux par le mode de communication synchrone, et à vérifier que les réseaux résultants ont les propriétés souhaitées, pour obtenir des réseaux de Petri comportant au plus une interface externe à un automate. Par exemple, dans l'automate A1, dont les comportements partiels sont modélisés par des réseaux de Petri élémentaires B1 à B13, la première étape consiste à :
- composer les réseaux initiaux B1 et B2, pour obtenir un réseau résultant P1;
- composer le réseau résultant P1 avec le réseau initial B3, pour obtenir un réseau résultant S2 qui a une interface unique, I1, avec l'extérieur à l'automate A1.

Tous les réseaux B1, B2, B3 qui ont I1 pour interface externe ont été composés. Le réseau résultant S2 représente un sous-automate qui sera utilisé au cours de la deuxième étape du procédé.

La mise en oeuvre consiste ensuite à composer d'autres réseaux initiaux :
- composer les réseaux initiaux B4 et B5, pour obtenir un réseau résultant P2;
- composer les réseaux initiaux B6 et B7 pour obtenir un réseau résultant P3;
- composer les deux réseaux résultants P2 et P3, pour obtenir un réseau résultant S3.

Tous les réseaux B4, B5, B6, B7 qui ont I6 pour interface externe à l'automate A1 ont été composés. Le réseau résultant S3 représente donc un sous-automate.

La mise en oeuvre du procédé selon l'invention consiste ensuite à :
- composer les réseaux initiaux B8 et B9, pour obtenir un réseau résultant P4;
- composer le réseau résultant P4 avec le réseau initial B6 pour obtenir un réseau résultant S5.

Tous les réseaux B8, B9, B10 qui ont I7 pour interface externe ont été composés. Le réseau résultant S5 représente donc un sous-automate.

La mise en oeuvre consiste ensuite à composer les réseaux initiaux B12 et B13, pour obtenir un réseau résultant S4 qui n'a pas d'interface externe à l'automate A1. Il reste un réseau initial B11 qui n'a pas été composé mais, dans cet exemple, le concepteur choisit délibérement de ne pas le composer. Le réseau résultant S4 et le réseau initial subsistant B11 représentent eux aussi des sous-automates, car ils font partie des réseaux issus de la première étape de la mise en oeuvre.

De manière analogue, la première étape de mise en oeuvre consiste, pour l'automate A2, à :
- composer en deux étapes des réseaux de Petri élémentaires initiaux B25, B26, B27 pour obtenir un sous-automate S14 ayant une interface I6 externe à l'automate A2;
- composer deux réseaux de Petri élémentaires initiaux B28 et B29 pour obtenir un sous-automate S13 qui n'a aucune interface externe à l'automate A2;
- composer deux réseaux de Petri initiaux B30 et B31 pour obtenir un sous-automate S12 qui a une interface I5 externe à l'automate A2;
- composer en trois étapes les réseaux de Petri B32, B33, B34, B35 pour obtenir un sous-automate S15 possédant une interface I3 externe à l'automate A2, et externe à l'ensemble E;

Pour l'automate A3, la première étape de la mise en oeuvre consiste à :
- composer les réseaux de Petri élémentaires initiaux B14 et B15 pour obtenir un sous-automate S7 possédant une interface I2 externe à l'automate A3, et externe à l'ensemble E;
- composer en deux étapes les réseaux de Petri élémentaires B16, B17, B18 pour obtenir un sous-automate S8 possédant une interface I7 externe à l'automate A3;
- composer les réseaux de Petri élémentaires initiaux B19 et B20 pour obtenir un sous-automate S9 possédant une interface I4 externe à l'automate A3.

Pour l'automate A4, la première étape consiste à :
- composer deux réseaux de Petri initiaux B21 et B22 pour obtenir un sous-automate S10 possédant une interface I4 externe à l'automate A4;
- composer deux réseaux de Petri élémentaires initiaux B23 et B24 pour obtenir un sous-automate S11 possédant une interface I5 externe à l'automate A4.

Pour les environnements respectifs des interfaces I1, I2, I3 externes à l'ensemble d'automates E, la première étape consiste à :
- composer deux réseaux de Petri élémentaires B36 et B37, modélisant respectivement des comportements partiels de l'environnement extérieur à l'interface I1, pour obtenir un sous-automate S1 ayant une seule interface qui est cette interface I1;
- composer deux réseaux de Petri initiaux B38 et B39 qui représentent respectivement des comportements partiels de l'environnement extérieur à l'interface I2 externe à l'ensemble E, pour obtenir un sous-automate S6 ayant une seule interface qui est cette interface l'interface I2;
- composer deux réseaux de Petri élémentaires B40 et B41 modélisant respectivement des comportements partiels de l'environnement extérieur à l'interface I3 externe à l'ensemble E, pour obtenir un sous-automate S16 ayant une seule interface constituée par l'interface I3.

La deuxième étape de la mise en oeuvre du procédé consiste, pour chaque interface externe à un automate, c'est-à-dire aussi bien les interfaces inter-automates que les interfaces externes à l'ensemble E, à : composer deux à deux par le mode de communication asynchrone des réseaux S1 à S16 la première étape, et ayant en commun une interface inter-automates ou externe à l'ensemble d'automates; et à vérifier que le réseau obtenu a les propriétés souhaitées par le concepteur. Le concepteur indique à la machine les deux réseaux à composer et indique qu'ils doivent être composés par le mode de communication asynchrone. Chaque composition fournit un réseau de Petri résultant qui modélise la communication entre deux interfaces inter-automates ou entre une interface externe à un automate et l'environnement de cet automate. Si la machine de développement constate que le réseau résultant d'une composition n'a pas les propriétés souhaitées pour ce réseau, elle le signale au concepteur et celui-ci doit modifier certains réseaux de Petri initiaux et relancer la première étape, pour les réseaux qui ont été composés et dont le réseau résultant n'a pas les propriétés souhaitées.

Dans cet exemple, la deuxième étape consiste donc à :
- composer le sous-automate S1 qui modélise l'environnement extérieur à l'interface I1 externe à l'ensemble E, et le sous-automate S2 de l'automate A1, pour obtenir un réseau résultant RC1 modélisant une communication entre A1 et l'extérieur à l'ensemble E, par l'interface externe I1;
- composer le sous-automate S6 modélisant l'environnement extérieur à l'interface I2, avec le sous-automate S7 de l'automate A3, pour obtenir un réseau résultant RC2 modélisant la communication entre A2 et l'extérieur à l'ensemble E, par l'interface I2;
- composer le sous-automate S16 modélisant l'environnement extérieur à l'interface I3, avec le sous-automate S15 de l'automate A2, pour obtenir un réseau résultant RC6 modélisant la communication de A2 avec l'extérieur à l'ensemble E, par l'interface I3;
- composer le sous-automate S5 de l'automate A1 avec le sous-automate S8 de l'automate A3 pour obtenir un réseau résultant RC3 modélisant la communication par l'interface I7 entre les automates A1 et A3;
- composer le sous-automate S9 de l'automate A3 avec le sous-automate S10 de l'automate A4 pour obtenir un réseau résultant RC4 modélisant la communication par l'interface I4 entre les automates A3 et A4;
- composer le sous-automate S11 de l'automate A4 avec le sous-automate S12 de l'automate A2, pour obtenir un réseau résultant RC5 modélisant la communication par l'interface I5 entre les automates A2 et A4;
- composer le sous-automate S14 de l'automate A2 avec le sous-automate S3 de l'automate A1, pour obtenir un réseau résultant RC7 modélisant la communication par l'interface I6 entre les automates A1 et A2.

Lorsque tous les réseaux résultants issus de la deuxième étape possèdent les propriétés souhaitées par le concepteur, la communication inter-automates et la communication avec l'environnement extérieur à l'ensemble E peuvent être considérées comme validées. Le concepteur passe alors à la mise en oeuvre de la troisième étape. Celle-ci consiste à réaliser des compositions par le mode de communication pseudo-synchrone, pour composer des réseaux de Petri modélisant des sous-automates issus de la première étape et validés par la deuxième étape, jusqu'à obtenir pour chaque automate, un réseau de Petri modélisant la fonction de cet automate, notamment les communications entre les sous-automates qui constituent cet automate. Les réseaux de Petri S1, S6, S16 ont été utilisés pour modéliser les communications avec l'extérieur à l'ensemble, mais ils ne font pas partie de l'ensemble d'automates A1,...,A4. Ils ne sont donc pas considérés au cours de cette troisième étape.

Dans cet exemple, la troisième étape consiste à :
- composer les sous-automates S2, S3, S4, S5, et B11 pour obtenir un réseau de Petri résultant modélisant l'ensemble de l'automate A1;
- composer les sous-automates S7, S8, S9, pour obtenir un réseau résultant modélisant l'automate A3;
- composer les sous-automates S10 et S11 pour obtenir un réseau résultant modélisant l'automate A4;
- composer les sous-automates S12, S13, S14, S15, pour obtenir un réseau résultant modélisant l'automate A2.

Lorsque tous les réseaux résultant de cette troisième étape ont effectivement les propriétés souhaitées par le concepteur, la mise au point des automates peut être considérée comme terminée. Il ne reste plus qu'à implémenter ces automates. Cette implémentation est réalisée de préférence en implémentant les sous-automates, plutôt que les automates, sous la forme de tables de données structurées décrivant les transitions de ces sous-automates. Ces tables de données sont déduites, de manière classique, du graphe d'accessibilité déterminé au cours de l'analyse de chacun des réseaux de Petri issus de la première étape et validés, pendant la deuxième étape de la mise en oeuvre du procédé selon l'invention. L'implémentation consiste en outre à : implémenter les communications asynchrones et pseudo-synchrones, qui ont permis de composer les réseaux au cours de la deuxième et de la troisième étape, sous la forme de suite d'instructions; et implémenter un moteur d'automate pour chaque automate, ce moteur utilisant ces tables de données et ces suites d'instructions pour concrétiser cet automate. La réalisation d'un logiciel implémentant ces moteurs d'automate est à la portée d'un Homme de l'Art.

L'invention ne concerne pas seulement un ensemble d'automates concrétisé par un logiciel. Un ensemble d'automates développé à l'aide du procédé selon l'invention peut aussi être concrétisé par un circuit logique câblé ou microprogrammé.

## Revendications

1. Procédé d'aide au développement d'un ensemble (E) d'automates communicants (A1 à A4), ces automates comportant une pluralité d'interfaces qui traitent une pluralité de messages entrelacés; cet ensemble d'automates étant développé à partir : d'interfaces externes à l'ensemble, d'interfaces (I1 à I3) inter-automates (I4 à I7), de la fonction que doit remplir chaque automate de cet ensemble, et de la fonction que remplit l'environnement extérieur à chaque interface externe à l'ensemble;
caractérisé en ce qu'il consiste à :
- fournir (1) à une machine de développement une description (3) de réseaux de Petri élémentaires dits initiaux, modélisant respectivement des comportements partiels de chaque fonction, en décrivant notamment des évènements déclencheurs ou conséquences de transitions dans chaque réseau de Petri initial en attribuant une étiquette à chaque transition, cette étiquette étant fonction d'au moins un évènement, chaque évènement étant un déclencheur ou étant une conséquence de cette transition; ces évènements concrétisant : des interfaces externes à l'ensemble d'automates, des interfaces inter-automates, et des interfaces inter-réseaux initiaux;
- vérifier (9), au moyen de cette machine de développement, que chaque réseau initial possède des propriétés souhaitées (4);
- fournir (1) à cette machine de développement une description (4) de contraintes inter-réseaux initiaux, correspondant au comportement de l'environnement extérieur à l'ensemble d'automates;
- désigner (1) à cette machine de développement, une pluralité de réseaux à composer et un mode de communication (2), pour lui faire composer (7) des réseaux de Petri initiaux, entre eux ou avec des réseaux de Pétri (8) remplaçant des réseaux initiaux ayant été composés précédemment, ou bien composer des réseaux remplaçant des réseaux initiaux ayant été composés précédemment; chaque composition étant réalisée en faisant communiquer au moins deux réseaux, par l'intermédiaire des étiquettes de leurs transitions, selon le mode de communication (2) désigné, ce dernier étant choisi parmi :
-- un mode synchrone;
-- un mode asynchrone;
-- un mode dit pseudo-synchrone, selon lequel les évènements constituant une communication avec l'extérieur au réseau résultant de la composition sont synchrones vis-à-vis de l'extérieur des réseaux à composer et sont asynchrones vis-à-vis de l'intérieur des réseaux à composer, chaque composition par le mode pseudo-synchrone tenant compte des contraintes inter-réseaux (4) ;
- puis vérifier (9, 10), au moyen de la machine de développement, que le réseau résultant de cette composition a des propriétés souhaitées (4) ;
- fournir (1) à la machine de développement une description (3) de réseaux initiaux modifiés, en remplacement de réseaux initiaux à composer, si le réseau (8) obtenu en composant ces dernier n'a pas les propriétés souhaitées (4) ;
- puis désigner (1) de nouveau à la machine de développement une pluralité de réseaux à composer (2) et un mode de communication (2) pour lui faire réaliser une suite de compositions (7) et de vérifications (9, 10), jusqu'à l'obtention de réseaux de Pétri, ayant des propriétés souhaitées (4), et modélisant respectivement : chaque communication entre deux interfaces inter-automates (I4 à I6) ou entre une interface externe (I1 à I3) et l'extérieur à l'ensemble d'automates (E), et chaque automate ( A1 à A4 ) de l'ensemble.

2. Procédé selon la revendication 1, caractérisé en ce que pour réaliser des compositions par le mode de communication synchrone , il consiste à fusionner toutes les transitions appartenant à deux réseaux à composer et dont les étiquettes comportent un même évènement (M) qui est :
- soit conséquence (!M) de l'une des transitions et déclencheur (?M) d'une autre transition;
- soit conséquence commune (!M) des transitions;
- soit déclencheur commun (?M) des transitions.

3. Procédé selon la revendication 1, caractérisé en ce que pour réaliser des compositions par le mode de communication asynchrone, il consiste à :
- relier un premier et un deuxième réseau à composer (R13, R14 ), par une file ( FIFO1, FIFO2 ) dans chaque sens de communication;
- imposer des contraintes temporaires sur le protocole de communication utilisant ces deux files, pendant la durée de la vérification des propriétés souhaitées du réseau résultant (RR) de la composition des deux réseaux à composer et des deux files.

4. Procédé selon la revendication 1, caractérisé en ce que pour composer une pluralité de réseaux (R15, R16, R17) par le mode de communication pseudo-synchrone, il consiste à
- relier ces réseaux par une file (FIFO5) unique possédant une pluralité d'entrées reliées respectivement à une sortie de chacun des réseaux à composer, et une pluralité de sorties reliées respectivement à une entrée de chacun des réseaux à composer;
- imposer une contrainte permanente consistant à donner la priorité aux évènements en provenance de cette file, par rapport aux évènements en provenance des interfaces (FIFO3, FIFO4) extérieures au réseau obtenu, pour le déclenchement de transitions dans les réseaux à composer;
- imposer des contraintes temporaires inter-réseaux, uniquement pendant la durée de la vérification des propriétés souhaitées du réseau de Petri modélisant le comportement d'un automate, et consistant à ajouter des conditions pour le déclenchement de transitions de l'un des réseaux à composer, ces conditions portant sur l'état des autres réseaux à composer, et correspondant au comportement de l'environnement du réseau résultant.

5. Procédé selon la revendication 1, caractérisé en ce que les réseaux de Pétri initiaux comportent chacun au plus une interface (I1 à I7) externe à un automate (A1 à A4), et en ce que la composition des réseaux de Pétri élémentaires initiaux comporte trois étapes successives, dans cet ordre :
- une première étape consistant à : composer (1′) des réseaux deux à deux (B1 à B41) par le mode de communication synchrone pour obtenir des réseaux de Pétri (S1 à S16) remplaçant des réseaux initiaux et comportant au plus une interface externe à un automate; vérifier que les réseaux obtenus ont des propriétés souhaitées; et recommencer la première étape pour les réseaux qui ont été composés et dont le réseau résultant n'a pas les propriétés souhaitées;
- une deuxième étape consistant, pour chaque interface externe à un automate, à : composer (2′) deux à deux par le mode de communication asynchrone, des réseaux de Pétri (S1 à S16, B11) issus de la première étape et ayant en commun une interface inter-automates ou externe à l'ensemble d'automates, pour obtenir lors de chaque composition un réseau de Pétri (RC1 à RC7) modélisant une communication entre deux interfaces inter-automates (I4 à I7), ou entre une interface (I1 à I3) externe à un automate et l'environnement de l'ensemble d'automates; vérifier que les réseaux obtenus ont des propriétés souhaitées (4); et recommencer la première étape pour les réseaux qui ont été composés et dont le réseau résultant n'a pas les propriétés souhaitées;
- une troisième étape consistant à : réaliser des compositions (3′) par le mode de communication pseudo-synchrone, pour composer des réseaux de Pétri (S2 à S5 et B11, S7 à S9, S10 et S11, S12 à S15) issus de la première étape et validés par la deuxième étape, en tenant compte des contraintes inter-réseaux initiaux (4) correspondant au comportement de l'environnement extérieur à l'ensemble, pour obtenir pour chaque automate (A1,...,A4) un réseau de Pétri modélisant la fonction de cet automate, notamment les communications entre les réseaux issus de la première étape; vérifier que les réseaux obtenus ont des propriétés souhaitées; et recommencer la première et la deuxième étape pour les réseaux qui ont été composés et dont le réseau résultant n'a pas les propriétés souhaitées.

6. Procédé selon la revendication 5, caractérisé en ce que pour implémenter les automates, il consiste en outre à :
- implémenter (12) les réseaux issus de la première étape (S2 à S5 et B11 pour A1; S12 à S15 pour A2; S7 à S9 pour A3; S10, S11 pour A4) sous la forme de tables de données décrivant les transitions des automates (A1 à A4) constitués des sous-automates respectivement modélisés par chacun de ces réseaux;
- implémenter (12) les communications asynchrones et pseudo-synchrones qui ont permis de composer ces réseaux, par des suites d'instructions;
- implémenter (12) un moteur d'automate pour chaque automate, ce moteur utilisant ces tables de données et ces suites d'instructions pour concrétiser cet automate.

7. Procédé selon la revendication 1, caractérisé en ce que pour faciliter la vérification (9, 10) de propriétés spécifiques de réseaux (8) résultant de la composition de réseaux, il consiste en outre à repérer (1) certains évènements au moment où le concepteur décrit les réseaux de Pétri initiaux (3); et à éliminer les évènements ainsi repérés, dans le graphe d'accessibilité (11) de chaque réseau résultant d'une composition, déterminé lors de la vérification (9, 10) que ce réseau a des propriétés souhaitées.

## Patentansprüche

1. Verfahren zur Unterstützung der Entwicklung eines Systems von miteinander verkehrenden Automaten (A1 bis A4), die mehrere Schnittstellen zur Bearbeitung mehrerer miteinander verschachtelter Nachrichten besitzen, wobei dieses System von Automaten entwickelt wird ausgehend von Schnittstellen zum Umfeld des Systems (I1 bis I3), von Schnittstellen (I4 bis I7) zwischen den Automaten, von der Aufgabe, die jeder Automat des Systems erfüllen soll und von der Aufgabe, die das Umfeld jenseits jeder äußeren Schnittstelle des Systems erfüllt, dadurch gekennzeichnet, daß es darin besteht:
- einer Entwicklungsmaschine eine Beschreibung (3) von elementaren ursprünglichen Petrinetzen zu liefern (1), die ein Modell der partiellen Verhaltensmuster jeder Aufgabe bilden, indem sie insbesondere auslösende oder Folgeereignisse von Übergängen in jedem ursprünglichen Petrinetz beschreiben und jedem Übergang ein Etikett zuteilen, das von mindestens einem Ereignis abhängt, wobei jedes Ereignis ein Auslöser oder eine Folge dieses Übergangs ist und die Ereignisse Schnittstellen zum Umfeld des Systems von Automaten, Schnittstellen zwischen den Automaten und Schnittstellen zwischen den ursprünglichen Netzen konkretisieren;
- mit Hilfe der Entwicklungsmaschine zu überprüfen (9), ob jedes ursprüngliche Netz gewünschte Eigenschaften (4) besitzt;
- dieser Entwicklungsmaschine eine Beschreibung (4) von Zwängen zwischen ursprünglichen Netzen zu liefern (1) entsprechend dem Verhalten des äußeren Umfelds des Systems von Automaten;
- dieser Entwicklungsmaschine zahlreiche zu komponierende Netze und einen Nachrichtenverkehrsmodus (2) zu bezeichnen (1), damit diese Maschine ursprüngliche Petrinetze miteinander (7) oder mit Petrinetzen (8), die ursprüngliche Netze ersetzen und vorher komponiert wurden, oder auch Netze miteinander komponieren kann, die ursprüngliche und vorher komponierte Netze ersetzen, wobei jede Komposition erfolgt, indem man mindestens zwei Netze über Etikette ihrer Übergänge gemäß dem bezeichneten Nachrichtenverkehrsmodus (2) miteinander verkehren läßt, und wobei dieser Modus ein synchroner, ein asynchroner oder ein pseudosynchroner Modus sein kann, wobei in dem letztgenannten Modus die eine Nachrichtenverbindung mit dem Umfeld des aus der Komposition resultierenden Netzes bildenden Ereignisse gegenüber dem Umfeld der zu komponierenden Netze synchron, aber im Inneren der zu komponierenden Netze asynchron sind und wobei jede Komposition durch den pseudosynchronen Modus die Zwänge innerhalb der Netze berücksichtigt (4);
- dann mit Hilfe der Entwicklungsmaschine zu überprüfen (9, 10), ob das aus dieser Komposition resultierende Netz gewünschte Eigenschaften besitzt (4);
- der Entwicklungsmaschine eine Beschreibung (3) von veränderten ursprünglichen Netzen als Ersatz für ursprüngliche zu komponierende Netze zu liefern, wenn das Netz (8), das durch Komposition dieser ursprünglichen Netze entstanden ist, nicht die gewünschten Eigenschaften (4) hat;
- dann erneut auf der Entwicklungsmaschine mehrere zu komponierende Netze (2) sowie einen Nachrichtenverkehrsmodus (2) zu bezeichnen (1), damit diese eine Folge von Kompositionen (7) und Überprüfungen (9, 10) durchführt, bis Petrinetze mit den gewünschten Eigenschaften (4) erzielt werden, wobei dann jede Verbindung zwischen zwei Schnittstellen zwischen Automaten (I4 bis I6) oder zwischen einer äußeren Schnittstelle (I1 bis I3) und dem Umfeld des Systems der Automaten (E) und jeder Automat (A1 bis A4) des Systems im Modell nachgebildet werden.

2. Verfahren nach Anspruch 1, dadurch gekennzeichnet, daß für die Kompositionen durch den synchronen Nachrichtenverkehrsmodus das Verfahren darin besteht, alle Übergänge, die zwei zu komponierenden Netzen angehören und deren Etikette ein gleiches Ereignis (M) enthalten, zu verschmelzen, wobei dieses Ereignis
- entweder die Folge (!M) eines der Übergänge und Auslöser (?M) eines anderen Übergangs,
- oder eine gemeinsame Folge (!M) der Übergänge,
- oder ein gemeinsamer Auslöser (?M) der Übergänge ist.

3. Verfahren nach Anspruch 1, dadurch gekennzeichnet, daß für die Kompositionen durch den asynchronen Nachrichtenverkehrsmodus das Verfahren darin besteht,
- ein erstes und ein damit zu komponierendes zweites Netz (R13, R14) über einen Speicher (FIFO1, FIFO2) in jeder Übertragungsrichtung miteinander zu verbinden,
- vorübergehende Zwänge auf das Verkehrsprotokoll dieser beiden Speicher während der Dauer der Überprüfung der gewünschten Eigenschaften des resultierenden Netzes (RR) der Komposition der beiden zu komponierenden Netze und der beiden Speicher aufzuerlegen.

4. Verfahren nach Anspruch 1, dadurch gekennzeichnet, daß es zur Komposition mehrerer Netze (R15, R16, R17) durch den pseudosynchronen Nachrichtenverkehrsmodus darin besteht,
- diese Netze durch einen gemeinsamen Speicher (FIFO5) zu verbinden, der mehrere je an einen Ausgang jedes der zu komponierenden Netze angeschlossenen Eingänge und mehrere je an einen Eingang jedes der zu komponierenden Netze angeschlossene Ausgänge besitzt,
- einen permanenten Zwang aufzuerlegen, der darin besteht, die Priorität den von diesem Speicher kommenden Ereignissen bezüglich der von den äußeren Schnittstellen (FIFO3, FIFO4) des Netzes erhaltenen Ereignisse für die Auslösung von Übergängen in den zu komponierenden Netzen zu verleihen,
- vorübergehende Zwänge zwischen den Netzen nur während der Dauer der Überprüfung der gewünschten Eigenschaften des das Verhalten eines Automaten im Modell nachbildenden Petrinetzes aufzuerlegen, die darin bestehen, Bedingungen für die Auslösung von Übergängen eines der zu komponierenden Netze hinzuzufügen, wobei diese Bedingungen sich auf den Zustand der anderen zu komponierenden Netze beziehen und dem Verhalten des Umfelds des resultierenden Netzes entsprechen.

5. Verfahren nach Anspruch 1, dadurch gekennzeichnet, daß die ursprünglichen Petrinetze je höchstens eine in das Umfeld eines Automaten (A1 bis A4) führende äußere Schnittstelle (I1 bis I7) besitzen und daß die Komposition der ursprünglichen elementaren Petrinetze nacheinander drei Schritte in folgender Reihenfolge enthält:
- einen ersten Schritt, der darin besteht, Netze paarweise (B1 bis B41) durch den synchronen Nachrichtenverkehrsmodus zu komponieren (1′), um Petrinetze (S1 bis S16) zu erhalten, die ursprüngliche Netze ersetzen und höchstens eine in das Umfeld eines Automaten führende Schnittstelle besitzen, dann zu überprüfen, ob die erhaltenen Netze die gewünschten Eigenschaften haben, und den ersten Schritt für die Netze zu wiederholen, die komponiert wurden und deren resultierendes Netz die gewünschten Eigenschaften nicht hat;
- einen zweiten Schritt, der darin besteht, für jede von einem Automaten nach außen führende Schnittstelle paarweise durch den asynchronen Nachrichtenverkehrsmodus Petrinetze (S1 bis S16, B11) zu komponieren (2′), die aus dem ersten Schritt stammen und eine gemeinsame Schnittstelle zwischen den Automaten oder zum Umfeld des Automatensystems haben, um bei jeder Komposition ein Petrinetz (RC1 bis RC7) zu erhalten, das ein Modell einer Nachrichtenverbindung zwischen zwei Schnittstellen zwischen Automaten (I4 bis I7) oder zwischen einer äußeren Schnittstelle eines Automaten und dem Umfeld des Automatensystems bildet, dann zu überprüfen, ob die erhaltenen Netze gewünschte Eigenschaften (4) haben, und den ersten Schritt für die Netze zu wiederholen, die komponiert worden sind und deren resultierendes Netz nicht die gewünschten Eigenschaften hat;
- einen dritten Schritt, der darin besteht, Kompositionen (3′) gemäß dem pseudosynchronen Nachrichtenverkehrsmodus herzustellen, um Petrinetze (S2 bis S5 und B11, S7 bis S9, S10 und S11, S12 bis S15) zu komponieren, die aus dem ersten Schritt stammen und im zweiten Schritt unter Berücksichtigung der Zwänge zwischen den ursprünglichen Netzen (4) entsprechend dem Verhalten des Umfelds des Systems validiert worden sind, um für jeden Automaten (A1, ... A4) ein Petrinetz zu erhalten, das ein Modell der Funktion dieses Automaten bildet, insbesondere ein Modell der Verbindungen zwischen diesem aus dem ersten Schritt stammenden Netzen, dann zu überprüfen, ob die erhaltenen Netze gewünschte Eigenschaften haben und den ersten und den zweiten Schritt für die Netze zu wiederholen, die komponiert worden sind und deren resultierendes Netz nicht die gewünschten Eigenschaften hat.

6. Verfahren nach Anspruch 5, dadurch gekennzeichnet, daß zur Implementierung der Automaten das Verfahren weiter darin besteht,
- die aus dem ersten Schritt stammenden Netze (S2 bis S5 und B11 für A1; S12 bis S15 für A2; S7 bis S9 für A3; S10, S11 für A4) in Form von Datentabellen zu implementieren (12), die die Übergänge der Automaten (A1 bis A4) beschreiben, die aus dem durch jedes der Netze im Modell nachgebildeten Unterautomaten gebildet werden,
- die asynchronen und pseudosynchronen Nachrichtenverbindungen, die die Komposition dieser Netze ermöglicht haben, durch Befehlsfolgen zu implementieren (12);
- einen Automatenmotor für jeden Automaten zu implementieren (12), wobei dieser Motor diese Datentabellen und diese Befehlsfolgen verwendet, um diesen Automaten zu konkretisieren.

7. Verfahren nach Anspruch 1, dadurch gekennzeichnet, daß zur Erleichterung der Überprüfung (9, 10) von spezifischen Eigenschaften von Netzen (8), die aus der Komposition von Netzen resultieren, das Verfahren weiter darin besteht, bestimmte Ereignisse in dem Augenblick zu erfassen (1), in dem der Entwurfsingenieur die ursprünglichen Petrinetze beschreibt (3), und die so erfaßten Ereignisse aus dem Zugänglichkeitsgraphen (11) jedes aus einer Komposition resultierenden Netzes zu entfernen, das bei der Überprüfung (9, 10), ob dieses Netz gewünschte Eigenschaften hat, bestimmt wurde.

## Claims

1. Method for assisting with the development of a set (E) of communicating automata (A1 to A4) comprising a plurality of interfaces which process a plurality of interleaved messages, said automata being developed from interfaces (I1 to I3) external to the set, inter-automaton interfaces (I4 to I7), the function that each automaton of the set must implement and the function to be implemented by the environment external to each interface external to the set,
characterised in that it comprises the following stages:
- supplying (1) to a development machine a description (3) of initial elementary Petri nets respectively modelling partial behaviours of each function by describing events which fire or are consequences of transitions in each initial Petri net and assigning a label to each transition dependent on at least one event, each event firing or being a consequence of said transition, said events representing interfaces external to the set of automata, inter-automaton interfaces and interfaces between the initial nets;
- verifying (9) on said development machine that each initial net has the required properties (4);
- supplying (1) to said development machine a description (4) of constraints between initial nets representing the behaviour of the environment external to the set of automata;
- notifying (1) to said development machine a plurality of nets to be combined and a communication mode (2) to cause it to combine (7) initial Petri nets with each other or with Petri nets (8) replacing initial nets previously combined or to combine nets replacing initial nets previously combined, each combination being effected by causing to communicate at least two nets using the labels of their transitions in the notified communication mode (2), which is chosen from the following modes:
-- a synchronous mode;
-- an asynchronous mode;
-- a pseudo-synchronous mode in which events constituting communication with the environment external to the net resulting from the combination are synchronous with the environment external to the nets to be combined and asynchronous within the nets to be combined, each pseudo-synchronous mode combination allowing for inter net constraints (4);
- causing said development machine to verify (9, 10) that the net resulting from said combination has the required properties (4);
- supplying (1) to the development machine a description (3) of modified initial nets replacing initial nets to be combined if the net (8) obtained by combining the initial nets does not have the required properties (4); and
- notifying (1) again to said development machine a plurality (2) of nets to be combined and a communication mode (2) to cause it to carry out a series of combinations (7) and verifications (9, 10) until Petri nets are obtained having the required properties (4) and respectively modelling each communication between two inter-automaton interfaces (I4 to I6) or between an external interface (I1 to I3) and the environment external to the set (E) of automata and each automaton (A1 to A4) of the set.

2. Method according to claim 1 characterised in that synchronous communication mode combination comprises merging all transitions belonging to two nets to be combined and whose labels share a common event (M) which:
- is a consequence (1M) of one of the transitions and fires (?M) another transition; or
- is a common consequence (!M) of the transitions; or
- fires (?M) all the transitions.

3. Method according to claim 1 characterised in that asynchronous communication mode combination comprises:
- linking first and second nets (R13, R14) to be combined by means of one queue (FIFO1, FIFO2) in each communication direction; and
- imposing temporary constraints on the communication protocol using the two queues throughout the duration of the verification of the required properties of the resulting net (RR) obtained by combining the two nets to be combined and the two queues.

4. Method according to claim 1 characterised in that the combination of a plurality of nets (R15, R16, R17) using the pseudo-synchronous communication mode comprises:
- linking said nets using a single queue (FIFO5) having a plurality of inputs respectively connected to an output of each of the nets to be combined and a plurality of outputs respectively connected to an input of each of the nets to be combined;
- imposing a permanent constraint giving events from said queue priority over events from interfaces (FIFO3, FIFO4) external to the net obtained to fire transitions in the nets to be combined; and
- imposing temporary inter-net constraints only during the verification of the properties required of the Petri net modelling the behaviour of an automaton and consisting in adding conditions for firing transitions of one of the nets to be combined, these conditions relating to the status of the other nets to be combined and representing the behaviour of the environment of the resulting net.

5. Method according to claim 1 characterised in that the initial Petri nets each comprise at most one interface (I1 to I7) external to an automaton (A1 to A4) and the combination of the initial elementary Petri nets comprises the following three stages in this order:
- a first stage comprising: combining (1′) nets two by two (B1 to B41) using the synchronous communication mode to obtain Petri nets (S1 to S16) replacing initial nets and comprising at most one interface external to an automaton; verifying that the nets obtained have the required properties; and repeating the first stage for nets which have been combined where the resulting net does not have the required properties;
- a second stage comprising, for each interface external to an automaton: combining (2′) two by two using the asynchronous communication mode Petri nets (S1 to S16, B11) obtained from the first stage and having a common inter-automaton interface or interface external to the set of automata to obtain from each such combination a Petri net (RC1 to RC7) modelling communication between two inter-automaton interfaces (I4 to I7) or between an interface (I1 to I3) external to an automaton and the environment of the set of automata; verifying that the nets obtained have the required properties (4); and repeating the first stage for nets that have been combined and for which the resulting net does not have the required properties; and
- a third stage comprising: using the pseudo-synchronous communication mode to combine (3′) Petri nets (S2 to S5 and B11, S7 to S9, S10 and S11, S12 to S15) obtained from the first stage and validated by the second stage allowing for inter-initial net constraints (4) representing the behaviour of the environment external to the set to obtain for each automaton (A1, ..., A4) a Petri net modelling the function of said automaton, in particular communication between the nets obtained from the first stage; verifying that the nets obtained have the required properties; and repeating the first and second stages for nets which have been combined and for which the resulting net does not have the required properties.

6. Method according to claim 5 characterised in that implementation of the automata further comprises:
- implementing (12) the nets obtained from the first stage (S2 to S5 and B11 for A1; S12 to S15 for A2; S7 to S9 for A3; S10, S11 for A4) in the form of data tables describing the transitions of the automata (A1 to A4) made up of subautomata respectively modelled by each of said nets;
- implementing (12) the asynchronous and pseudo-synchronous mode communications used to combine said nets by series of instructions;
- implementing (12) an automaton engine for each automaton using said data tables and said series of instructions to implement said automaton.

7. Method according to claim 1 characterised in that to facilitate verification (9, 10) of the specific properties of nets (8) resulting from the combination of nets it further comprises identifying (1) certain events when the designer describes the initial Petri nets (3) and eliminating the events thus identified in the reachability graph (11) of each net resulting from a combination determined during verification (9, 10) that the net has the required properties.
